**Europäisches Patentamt**

**European Patent Office**

**Office européen des brevets**

(19)

(11) Veröffentlichungsnummer : **0 096 149**
**B1**

(12)

# EUROPÄISCHE PATENTSCHRIFT

(45) Veröffentlichungstag der Patentschrift :
12.11.86

(21) Anmeldenummer : 83100466.8

(22) Anmeldetag : 20.01.83

(51) Int. Cl.⁴ : **B 01 D 47/16**

(54) Verfahren und Vorrichtung zum Entfernen von Schwebestoffen aus Gasen.

(30) Priorität : 21.05.82 DE 3219088

(43) Veröffentlichungstag der Anmeldung :
21.12.83 Patentblatt 83/51

(45) Bekanntmachung des Hinweises auf die Patenterteilung : 12.11.86 Patentblatt 86/46

(84) Benannte Vertragsstaaten :
AT BE CH FR GB IT LI NL SE

(56) Entgegenhaltungen :
DE-B- 1 035 621
DE-B- 2 015 737
US-A- 2 235 998
H. Brauer, Grundlagen der Einphasen- u. Mehrphasenströmungen, Verlag Sauerländer/Aarau u.
Frankfurt a.M., 1971, Seite 336

(73) Patentinhaber : Hugo Petersen Ges. für verfahrenstechn. Anlagenbau mbH & Co KG
Postfach 4640
D-6200 Wiesbaden 1 (DE)

(72) Erfinder : Kijowsky, Norbert
Dantestrasse 17
D-6200 Wiesbaden 1 (DE)
Erfinder : Seipenbusch, Jürgen, Dipl.-Ing.
Mendelssohn-Bartholdy-Strasse 12
D-6200 Wiesbaden 1 (DE)

(74) Vertreter : Klöpsch, Gerald, Dr.-Ing.
An Gross St. Martin 6
D-5000 Köln 1 (DE)

0 096 149

**Beschreibung**

Die Erfindung betrifft eine Vorrichtung zum Entfernen von Schwebestoffen aus Gasen, bestehend aus einer Kammer mit axialem Gaseintritt und tangentialem Gasaustritt, die jeweils über die gesamte Kammertiefe reichen, und einem achsmittig in der Kammer auf einer Welle gelagerten und aus Einzelelementen bestehend Drehzerstäuber mittels dem Waschflüssigkeit in den Gasstrom eingetragen wird.

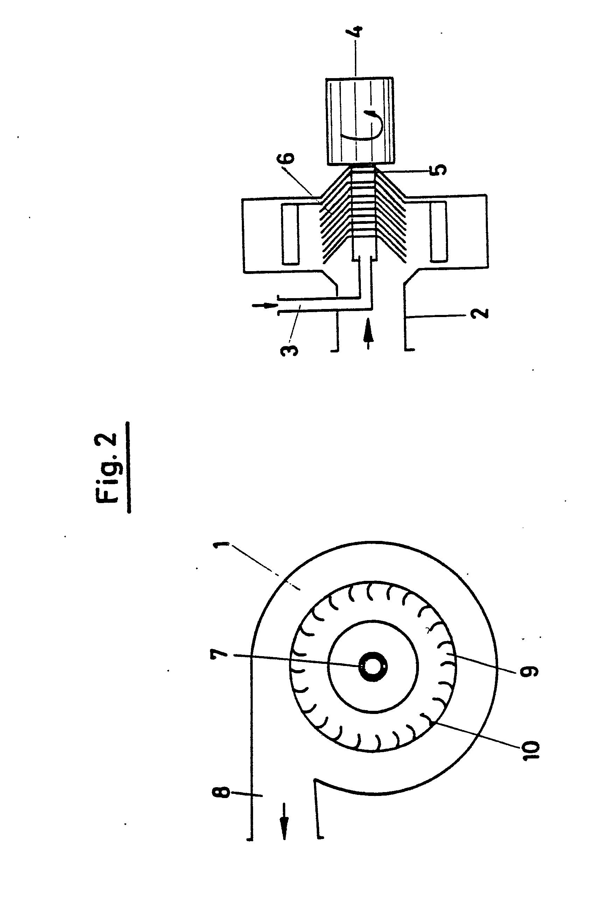

Aus der DE-B-1 035 621 ist eine als Befeuchtungskammer bezeichnete Gasvorbereitungsstufe beschrieben, die von dem zu behandelnden Gas axial durchströmt wird, wobei dem Gas durch tangentialen Ein- und Austritt eine gewisse Drehbewegung aufgeprägt wird. Im oberen Teil dieser Kammer wird die Waschflüssigkeit durch eine Zerstäubervorrichtung sehr fein zerstäubt. Die Zerstäubervorrichtung ist achsmittig angeordnet und besteht nach der Darstellung aus mehreren sich drehenden Zerstäuberscheiben, denen, soweit aus Fig. 2 ersichtlich, Waschflüssigkeit an ihrem äußeren Umfang zugeleitet wird. Eine gleichmäßige Verteilung und Beschleunigung der Flüssigkeit ist so jedoch nicht möglich. Diese Vorgehensweise hat den Nachteil, daß die Vorteile der Drehbewegung des Gases durch die im wesentlichen axiale Gasführung nicht konsequent genutzt werden. Die unzureichende Wirksamkeit für die Schwebestoffabscheidung ist zudem durch die Verwendung lediglich als Befeuchtungs- und Vorbereitungskammer belegt.

Aus der US-A-2 235 998 ist eine Zerstäubervorrichtung mit einem achsmittigen Drehzerstäuber bekannt, mittels der Waschflüssigkeit in Tropfenform in den Gasstrom eingetragen und die Waschflüssigkeit über die gesamte Kammertiefe verteilt in den Gasstrom eingetragen wird, bei der jedoch Gas und Waschflüssigkeit in Gegenstrom geführt sind, und eine kontrollierte gleichmäßige Verteilung der Waschflüssigkeit sowohl in axialer als auch in radialer Richtung nicht zu erreichen ist.

In der DE-B-2 015 737 ist auch bereits eine Zerstäubervorrichtung beschrieben, in der Gas und Waschflüssigkeit gleichsinnig geführt werden. Durch am inneren Gaseintritt vorgesehene Beschleunigungsschaufeln soll die Neubildung von Waschflüssigkeitströpfchen vermieden werden.

Ausgehend von einer Vorrichtung gemäß DE-B-2 015 737 besteht die Aufgabe der Erfindung darin, bei einer Vorrichtung mit axialem Gaseintritt und tangentialem Gasaustritt sowie achsmittig in einer Kammer auf einer Welle gelagerten und aus Einzelelementen bestehenden Drehzerstäuber eine gleichmäßigere, kontrollierte Verteilung der Waschflüssigkeit sowohl in axialer als auch in radialer Richtung zu erreichen.

Diese Aufgabe wird erfindungsgemäß bei einer Vorrichtung zum Entfernen von Schwebestoffen aus Gasen, bestehend aus einer Kammer mit axialem Gaseintritt und tangentialem Gasaustritt, die jeweils über die gesamte Kammertiefe reichen, und einem achsmittig in der Kammer auf einer Welle gelagerten und aus Einzelelementen bestehenden Drehzerstäuber dadurch gelöst, daß die Einzelelemente (6) des Drehzerstäubers in Form von sich quer zur Welle (5) erstreckenden Tellern oder Bechern ausgebildet sind, die im Abstand von 2 bis 10 mn zueinander auf der Welle angeordnet sind und daß die Welle (5) als Hohlwelle ausgebildet ist, deren Hohlwellenraum als Zuführung für die Waschflüssigkeit dient.

Vorteilhaft bei dieser Vorgehensweise ist die vollständige Ausnutzung der Behandlungskammer durch praktisch homogen verteilte Waschflüssigkeitstropfen, die aufgrund ihrer hohen Geschwindigkeit beim Zusammenprall mit Schwebestoffteilchen diese in sich aufnehmen und so zur Abscheidung bringen. Als besonders vorteilhaft hat es sich dabei erwiesen, durch die Wahl von Durchmesser und Umfangsgeschwindigkeit der Zerstäuberteller oder -becher Waschflüssigkeitstropfen mit einem mittleren Durchmesser zwischen 50 μm und 500 μm zu erzeugen. Der Zusammenhang zwischen den genannten Größen kann rechnerisch über eine der Literatur (H. Brauer, Grundlagen der Einphasen- und Mehrphasen : strömungen, Verlag Sauerländer/Aarau u. Frankfurt a. M., 1971, Seite 336) entnommene Beziehung hergestellt werden.

$$\overline{d}p = 0{,}425\sqrt{\sigma/n^2 R\rho_p}$$

mit $\overline{d}p$ als mittlerem Tropfendurchmesser
$\sigma$ Oberflächenspannung der Flüssigkeit
n Drehzahl
R Radius des Zerstäuberelementes
$\rho_p$ Dichte der Flüssigkeit

Die dabei angewendete Umfangsgeschwindigkeit liegt vorteilhafterweise zwischen 20 m/s und 120 m/s, bevorzugt zwischen 50 m/s und 80 m/s.

Zur Erzielung einer homogenen Verteilung der Waschflüssigkeitstropfen in der Behandlungskammer in Verbindung mit einer maximalen Schwebestoffabscheidung hat sich die Zugabe von 1,5 l-10l/m³ zu behandelnden Gases ergeben. Die kleinere Waschflüssigkeitsmenge wird dabei in Kombination mit kleiner mittlerer Tropfengröße und hoher Umfangsgeschwindigkeit der Zerstäuberteller oder -becher gewählt und umgekehrt.

Aufgrund der Drehbewegung des Gases auf spiralförmigen Bahnen um die gedachte Drehachse, die

2

0 096 149

in etwa mit der Mittelachse der angetriebenen Welle zusammenfällt, wird im äußeren Bereich der Behandlungskammer auf die Waschflüssigkeitstropfen eine Zentrifugalbeschleunigung ausgeübt, so daß die Relativgeschwindigkeit zwischen dem Gas und damit den Schwebestoffteilchen, die der Gasbewegung folgen, und den Waschflüssigkeitstropfen deutlich höher liegt, als bei einer axialen Gasströmung in der Behandlungskammer möglich wäre. Die Relativgeschwindigkeit zwischen Schwebestoff und Waschflüssigkeitstropfen ist aber ausschlaggebend für die erzielbare Schwebestoffabscheidung.

Bei einer anderen Ausführungsform der Erfindung ist in der Kammer zusätzlich ein Radialgebläselaufrad angeordnet, welches von der Drehzerstäuberwelle oder von einer hiervon unabhängigen Welle angetrieben sein kann.

Die Behandlungskammer besteht nach einer bevorzugten Ausführungsform der Erfindung aus zwei ebenen Begrenzungswänden senkrecht zur Drehachse der Gasströmung einer spiralförmig erweiterten oder zylindrischen Begrenzungswand, die zu den ebenen Begrenzungswänden senkrecht steht, wobei die tangentiale Aus- bzw. Eintrittsöffnung für das Gas über die gesamte Tiefe der Kammer reicht.

Anhand der in den Zeichnungen dargestellten Figuren ist die Erfindung nachfolgend an zwei Ausführungsbeispielen beschrieben. Es zeigen :

Figur 1 in zwei Ansichten eine erste Ausführungsform einer Vorrichtung gem. Erfindung.

Figur 2 in zwei Ansichten eine zweite Ausführungs- form einer Vorrichtung gem. Erfindung.

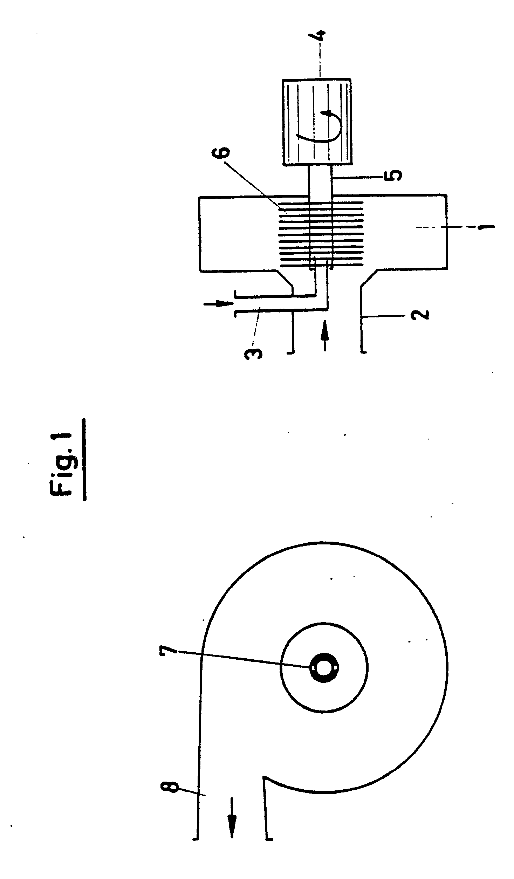

Bei der Ausführungsform der Fig. 1 wird das zu behandelnde Gas einer Behandlungskammer 1 axial durch den sich zur Kammer 1 hin konisch erweiternden Eintrittsstutzen 2 zugeführt. Die Waschflüssigkeit gelangt über die Rohrleitung 3 praktisch drucklos vom vorderen Teil der als Hohlwelle ausgebildeten, von einem Motor 4 direkt oder indirekt angetriebenen Welle 5, auf der in geringem Abstand voneinander Zerstäuberteller 6 befestigt sind.

Über Ausnehmungen 7 in der Hohlwelle 5 gelangt die Waschflüssigkeit in gleichmäßiger Verteilung auf die Zerstäuberteller 6, wird dort infolge der Drehbewegung der Zerstäuberteller 6 zu deren Umfang hin beschleunigt und von dort, in Tropfen aufgeteilt, in die Kammer 1 geschleudert. Der Drehsinn der Zerstäuberscheiben kann entgegengesetzt oder, bevorzugt, gleich dem Drehsinn der Gasströmung gewählt werden, wobei sich die drehende Gasbewegung durch die tangentiale Anordnung des Gasaustrittsstutzens 8 ergibt.

Bei der Ausführungsform der Fig. 2 tritt das zu behandelnde Gas axial durch den Stutzen 2 in die Behandlungskammer 1 ein und wird dort durch die sich drehenden, am Laufrad 9 angebrachten Schazufeln 10 in eine schnelle Drehbewegung versetzt. Unterstützt wird die Übertragung der Drehbewegung auf das Gas durch die von den Bechern 6 der von der Welle 5 angetriebenen Zerstäubervorrichtung abgeschleuderten Waschflüssigkeitstropfen. Das beschaufelte Laufrad 9 wird ebenfalls über die Welle 5 vom Motor 4 angetrieben. Die Waschflüssigkeit wird den Zerstäuberbechern 6 über die Rohrleitung 3 zugeführt, von der sie in die im vorderen Teil als Hohlwelle ausgeführte Welle 5 gelangt und durch die Ausnehmungen 7 die Zerstäuberbecher 6 erreicht.

**Patentansprüche**

1. Vorrichtung zum Entfernen von Schwebstoffen aus Gasen, bestehend aus einer Kammer (1) mit axialem Gaseintritt und tangentialem Gasaustritt, die jeweils über die gesamte Kammertiefe reichen, und einem achsmittig in der Kammer auf einer Welle (5) gelagerten und aus Einzelelementen (6) bestehenden Drehzerstäuber mittels dem Waschflüssigkeit in den Gasstrom eingetragen wird, dadurch gekennzeichnet, daß die Einzelelemente (6) des Drehzerstäubers in Form von sich quer zur Welle (5) erstreckenden Tellern oder Bechern ausgebildet sind, die im Abstand von 2 bis 10 mm zueinander auf der Welle angeordnet sind, und daß die Welle (5) als Hohlwelle ausgebildet ist, deren Hohlwellenraum als Zuführung für die Waschflüssigkeit dient.

2. Vorrichtung nach Anspruch 1, dadurch gekennzeichnet, daß in der Kammer (1) zusätzlich ein Radialgebläserad (9) angeordnet ist, das von der Welle (5) des Drehzerstäubers oder von einer hiervon unabhängigen Welle angetrieben ist.

3. Vorrichtung nach Ansprüchen 1 oder 2, dadurch gekennzeichnet, daß die Hohlwelle (5) mit einem Ende in der Wandung der Kammer (1) gelagert ist und in das in die Kammer vorragende Ende der Welle eine Rohrleitung (3) für die Zuführung der Waschflüssigkeit in den Hohlwellenraum hineinragt.

**Claims**

1. Device for the removal of suspended material from gases consisting of a chamber (1) with axial gas inlet and tangential gas outlet both extending through the whole chamber depth, and a rotary sprayer which is positioned concentrically in the chamber on a shaft (5) and consists of individual elements and which feeds washing liquid into the gas flow, characterized in that the individual elements (6) of the rotary sprayer have the form of plates or cups extending transversely to the shaft (5), said plates and cups being positioned in a distance of 2 to 10 mn on the shaft and that the shaft (5) is a hollow shaft which serves as passage for the washing liquid.

3

**0 096 149**

2. Device according to claim 1, characterized in that a radial-flow-fan wheel (9) is positioned additionally in the chamber (1), said wheel being driven by the shaft (5) of the rotary sprayer or by a shaft independent from the shaft of the rotary sprayer.

3. Device according to claim 1 or 2, characterized in that one end of the hollow shaft (5) is positioned in the wall of the chamber (1) and that a pipe line (3) for the passage of the washing liquid into the hollow space of the shaft projects into the end of the shaft which extends into the chamber.

**Revendications**

1. Installation pour l'élimination de matières en suspension de mélanges gazeux, constituée d'une chambre (1) avec une entrée axiale et une sortie tangentielle pour le mélange gazeux, qui s'étendent chacune sur toute la profondeur de la chambre, ainsi que d'un pulvérisateur rotatif, composé d'éléments distincts (6) et monté sur un arbre (5) coaxial à l'axe de la chambre, pour l'introduction d'un liquide de lavage dans le courant gazeux, caractérisée en ce que les éléments distincts (6) du pulvérisateur rotatif sont des éléments en forme de disques ou de coupes perpendiculaires à l'arbre (5), disposés à une distance de 2 à 10 mm les uns des autres sur l'arbre (5), celui-ci étant un arbre creux, dont l'intérieur sert à l'adduction du liquide de lavage.

2. Installation suivant la revendication 1, caractérisée en ce que la chambre (1) contient en outre une roue de ventilateur radiale (9) entraînée, soit par l'arbre (5) du pulvérisateur rotatif, soit par un arbre indépendant de ce dernier.

3. Installation suivant les revendications 1 et 2, caractérisée en ce que l'arbre creux (5) est monté avec l'une de ses extrémités dans la paroi de la chambre (1) et une conduite (3) pour l'adduction du liquide de lavage à l'intérieur de l'arbre creux pénètre dans celui-ci par l'extrémité faisant saillie dans la chambre.

## Fig.1

0 096 149

Fig. 2